# DEMANDE DE BREVET EUROPEEN

(11) **EP 0 799 572 A1**
(43) Date de publication de la demande: **08.10.1997**
(21) Numéro de dépôt: 96490046.8
(22) Date de dépôt: 21.11.1996
(51) Int. Cl.: A22C 17/00

(54) **Dispositif pour la préparation de brochettes**

(30) Priorité: 04.12.1995 FR 9514880
(71) Demandeur: Ets. Azmy Faouzy, 59320 Haubourdin (FR)
(72) Inventeur: Azmy, Faouzy, 59193 Erquinghem/Lys (FR)

(57) **Abrégé**

L'invention se rapporte à un dispositif (1) pour la préparation de brochettes caractérisé en ce qu'il comprend :
- au moins une rangée de réceptacles (2) reliés les uns aux autres et disposés suivant un axe (5) dit d'alignement et,
- entre les réceptacles (2) contigus, la cloison intermédiaire dont les faces opposées forment les parois desdits logements, présente une découpe (6) de section en U assurant la communication entre les logements, lesquelles découpes sont alignées sur un axe commun et,
- aux extrémités de l'ensemble constitué par les réceptacles (2) alignés, les deux parois présentent également une découpe (8) en U alignée de même manière sur l'axe commun précité.

## Description

L'invention se rapporte à un dispositif pour la préparation de brochettes.

Classiquement, pour préparer une brochette, l'opérateur fractionne les ingrédients nécessaires à la confection de la brochette, par exemple, en coupant la viande (hachée ou non) et/ou les légumes, fruits, fromage ou autres en morceaux qu'il embroche un par un sur une pique.

La mise en place des divers ingrédients sur la pique n'est pas sans danger ni sans difficulté.

En effet, en voulant placer un morceau d'aliment sur la pique, il arrive que l'opérateur se blesse avec la pointe de celle-ci.

Outre le risque évoqué plus haut, se pose également un problème au niveau du stockage des brochettes.

Pour permettre la manipulation des brochettes sans risque de se brûler avant ou après la cuisson, les piques doivent être relativement longues afin que l'extrémité de la brochette destinée à être saisie par l'utilisateur se situe à une distance minimale de celle occupée par les aliments.

En raison de la longueur de ces piques de l'ordre de quarante à cinquante centimètres, il n'est pas très commode de placer ces brochettes préparées dans le réfrigérateur.

C'est d'ailleurs pour cette raison que les brochettes préparées et offertes à la vente dans les magasins utilisent des piques très courtes.

La longueur de ces piques est alors juste suffisante pour être saisie par deux doigts, d'où le risque de se brûler lorsqu'on les manipule, par exemple, pour les retirer du foyer qui a servi à les cuire.

Il s'agit donc d'une présentation peu commode.

Un des résultats de l'invention vise à obtenir est un dispositif de préparation de brochettes qui, constituées d'une pluralité de morceaux d'aliments embrochés sur une pique, remédie aux inconvénients précités.

A cet effet, l'invention a pour objet un tel dispositif de préparation de brochettes notamment caractérisé en ce qu'il comprend :
- au moins une rangée de réceptacles délimités chacun par un fond et des parois latérales, lesquels réceptacles sont reliés les uns aux autres et sont disposés suivant un axe dit d'alignement et,
- entre les réceptacles contigus, la cloison intermédiaire dont les faces opposées forment les parois desdits logements, présente une découpe de section en U assurant la communication entre les logements définis par le réceptacle, lesquelles découpes sont alignées sur un axe commun et,
- aux extrémités de l'ensemble constitué par les réceptacles alignés, les deux parois présentent également une découpe en U alignée de même manière sur l'axe commun précité de sorte qu'une pique puisse être, d'une part, engagée suivant l'axe commun au travers des découpes pour embrocher les morceaux d'aliments et, d'autre part, dégagée de l'ensemble par déplacement de la pique dans une direction perpendiculaire au fond des U.

L'invention sera bien comprise à l'aide de la description ci-après faite, à titre d'exemple non limitatif, en regard du dessin ci-annexé qui représente schématiquement :

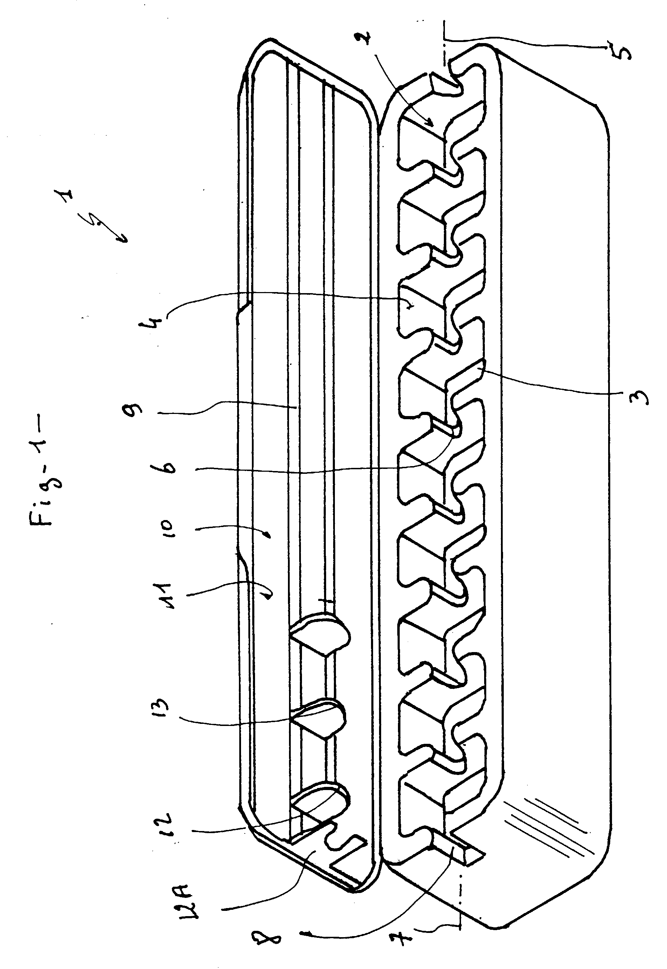

- figure 1 : vue en élévation d'un dispositif selon l'invention,
- figure 2 : vue de l'extrémité d'un dispositif selon l'invention,
- figure 3 : vue en élévation d'une variante de la figure 1.

En se reportant au dessin, on voit que pour confectionner une brochette, on fait appel à un dispositif 1 de préparation de brochettes.

Selon l'invention, ce dispositif comprend :
- au moins une rangée de réceptacles 2 délimités chacun par un fond 3 et des parois latérales 4, lesquels réceptacles sont reliés les uns aux autres et sont disposés suivant un axe 5 dit d'alignement et,
- entre les réceptacles 2 contigüs, la cloison intermédiaire dont les faces opposées forment les parois desdits logements, présente une découpe 6 de section en U assurant la communication entre les logements définis par le réceptacle, lesquelles découpes sont alignées sur un axe commun et,
- aux extrémités de l'ensemble constitué par les réceptacles 2 alignés, les deux parois présentent également une découpe 8 en U alignée de même manière sur l'axe commun précité de sorte qu'une pique puisse être, d'une part, engagée suivant l'axe commun 7 au travers des découpes 8 et 6 pour embrocher les morceaux d'aliments et, d'autre part, dégagée de l'ensemble par déplacement de la pique dans une direction D perpendiculaire au fond des U.

Les réceptacles permettent de répartir les morceaux de viandes et/ou légumes, fruits, poisson ou autres, puis, au dernier moment, d'introduire la pique au travers des découpes.

L'opérateur peut introduire la pique sans crainte de se salir et sans crainte de se blesser.

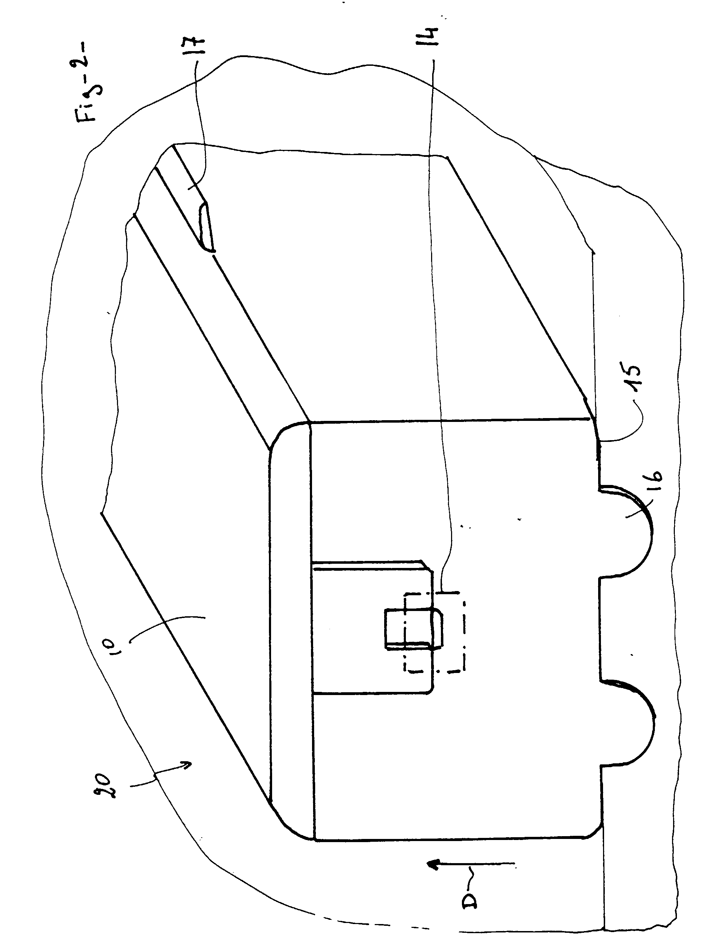

Avantageusement, l'ensemble 20 constitué par les réceptacles 2, comprend un couvercle 10 et la face 11 dite interne de ce couvercle porte au moins une patte 12 qui, lorsque le couvercle est en position fermée (figure 2), s'étend au droit d'une découpe notamment à proximité de l'une des parois d'extrémités sur une certaine hauteur afin que l'extrémité libre 13 de cette patte 12 et le fond du canal en U réalisent un moyen 14 de guidage pour la pique.

Au moins deux pattes écartées l'une de l'autre d'une distance suffisante permettent un guidage correct de la pique.

Outre ceci, la face interne du couvercle 10 porte plusieurs nervures 9 visant à comprimer les aliments de manière à les maintenir en place lors de l'introduction de la pique.

Celle 12A des pattes 12 qui se trouve au plus près de la découpe 8 de la paroi d'extrémité présente avantageusement une encoche en U dont la concavité est tournée vers le fond des réceptacles.

Lorsque le couvercle est en place, ces nervures s'étendent au droit de chaque réceptacle.

La face inférieure 15 de l'ensemble 20 constitué par des réceptacles 2 présente avantageusement une nervure 16 s'étendant transversalement à l'axe longitudinal de cet ensemble, de sorte que cette nervure peut être appuyée sur le rebord d'un plan de travail pour bloquer en translation le dispositif lors de l'introduction de la pique.

Le couvercle sera pourvu d'une languette de préhension 17 visant à faciliter la manoeuvre du couvercle.

Un tel dispositif permet, d'une part, de confectionner les brochettes et, d'autre part, de disposer et maintenir les morceaux d'aliments avant engagement de la pique.

L'ensemble logeant les morceaux d'aliments peut être rangé facilement dans une chambre froide pour être consommé ultérieurement sans que cela soit trop encombrant.

De la marinade peut-être introduite dans chaque réceptacle et l'ensemble manipulé sans crainte de se salir.

Pour une utilisation en tant que conditionnement, les découpes présentées par les parois extrêmes seront obturées par un opercule (non représenté).

L'ensemble est obtenu par moulage, par thermoformage d'un plastique alimentaire ou autre matériau alimentaire.

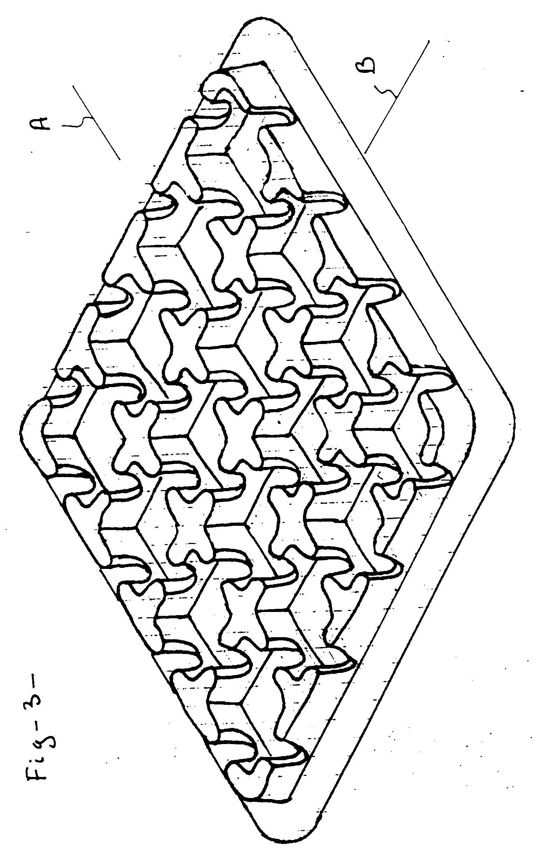

Bien entendu, au lieu d'une seule rangée de réceptacles, il est possible de prévoir plusieurs rangées de réceptacles (figure 3) disposées côte à côte à la manière d'une matrice et recouvertes d'un même couvercle.

Ce dispositif peut être présenté sous une autre forme qui pourra convenir aux industries agro-alimentaires ou aux traiteurs, utilisable à la fois, en tant que conditionnement d'aliments préparés et de dispositif de préparation de brochettes.

Ce modèle est obtenu soit par moulage ou thermoformage d'un plastique alimentaire, soit par moulage de polystyrène ou emboutissage d'aluminium.

Le couvercle sera réalisé à partir d'un film plastique ou aluminium.

Ce dispositif pourrait être jetable ou réutilisable.

Egalement, lorsque les réceptacles sont disposés selon deux directions sécantes et notamment orthogonales, on peut prévoir que chaque réceptacle communique avec les réceptacles qui l'entourent par des encoches du type précité de sorte que les piques peuvent être introduites selon les deux directions sécantes et notamment orthogonales A, B.

Ainsi, si l'on prévoit une matrice X x Y, on peut confectionner soit X brochettes comprenant Y morceaux ou Y brochettes comprenant X morceaux d'aliments.

Ce dispositif pourrait être utilisé en tant que conditionnement notamment de glaçons, glaces ou autres.

Pour cela, les découpes présentées par les parois extrêmes sont obturées par un opercule (non représenté) en matériau plastique, élastomère ou autre évitant toute fuite du liquide, mais pouvant être traversés par la pique.

Par exemple, pour la confection de glaces, la pique en métal, plastique ou bois est introduite dans l'ensemble 20 avant congélation, les ingrédients congelés sont ensuite dégagés de l'ensemble 20 par déplacement de la pique selon une direction D perpendiculaire au fond des encoches en U.

Le dispositif, avantageusement, comprend une résistance chauffante (non représentée) facilitant le dégagement des ingrédients alimentaires congelés.

Avec ce nouveau dispositif de préparation de brochettes :
- on élimine tout danger de blessure avec la pointe de la pique lors de la confection de la brochette,
- on gagne un temps considérable dans la mesure où un nombre certain de morceaux d'aliment sont embrochés en une seule opération.

De la même façon, cela permet d'enlever après cuisson les morceaux de la pique en une seule opération.

Ce dispositif pourra convenir tant aux particuliers, qu'aux traiteurs.

## Revendications

1. Dispositif (1) pour la préparation de brochettes comprenant :
- au moins une rangée de réceptacles (2) délimités chacun par un fond (3) et des parois latérales (4), lesquels réceptacles sont reliés les uns aux autres et sont disposés suivant un axe (5) dit d'alignement et,
- entre les réceptacles (2) contigus, la cloison intermédiaire dont les faces opposées forment les parois desdits logements, présente une découpe (6) de section en U assurant -la communication entre les logements définis par le réceptacle, lesquelles découpes sont alignées sur un axe commun et,
- aux extrémités de l'ensemble constitué par les réceptacles (2) alignés, les deux parois présentent également une découpe (8) en U alignée de même manière sur l'axe commun précité de sorte qu'une pique puisse être, d'une part, engagée suivant l'axe commun (7) au travers des découpes (8) et (6) pour embrocher les morceaux d'aliments et, d'autre part, dégagée de l'ensemble par déplacement de la pique dans une direction (D) perpendiculaire au fond des U,
- un couvercle (10) et un moyen (14) de guidage de la pique,
ce dispositif étant **caractérisé** en ce que la face (11) dite interne du couvercle porte au moins deux pattes (12) écartées l'une de l'autre qui, lorsque le couvercle est en position fermée, s'étendent chacune au droit d'une découpe sur une certaine hauteur afin que l'extrémité libre (13) de cette patte (12) et le fond du canal en U réalisent le moyen (14) de guidage pour la pique.

2. Dispositi-f selon la revendication 1 **caractérisé** en ce que la face inférieure (15) de l'ensemble (20) constitué par les réceptacles (2) présente avantageusement une nervure (16) s'étendant transversalement à l'axe longitudinal de cet ensemble, de sorte que cette nervure peut être appuyée sur le rebord d'un plan de travail pour bloquer en translation le dispositif lors de l'introduction de la pique.

3. Dispositif selon la revendication 1 **caractérisé** en ce que plusieurs rangées de réceptacles sont disposées côte à côte à la manière d'une matrice.

4. Dispositif selon la revendication 3 **caractérisé** en ce que, lorsque les réceptacles sont disposés selon deux directions sécantes, chaque réceptacle communique avec les réceptacles qui l'entourent par des encoches, de sorte que les piques peuvent être introduites selon les deux directions sécantes (A, B).

5. Dispositif selon la revendication 1 **caractérisé** en ce que les découpes présentées par les parois extrêmes sont obturées par un opercule.

6. Dispositif selon la revendication 1 **caractérisée** en ce qu'il comprend une résistance chauffante.
